Europäisches Patentamt

European Patent Office

Office européen des brevets

(11) Veröffentlichungsnummer: **0 445 792 A1**

## EUROPÄISCHE PATENTANMELDUNG

(21) Anmeldenummer: **91103454.4**

(22) Anmeldetag: **06.03.91**

(51) Int. Cl.5: **C02F 9/00, C02F 1/42, C02F 1/28, C02F 1/76, B01J 41/00**

(30) Priorität: **07.03.90 DE 4007151**

(43) Veröffentlichungstag der Anmeldung: **11.09.91 Patentblatt 91/37**

(84) Benannte Vertragsstaaten: **AT BE CH DE DK ES FR GB IT LI LU NL SE**

(71) Anmelder: **MEDAREX AKTIENGESELLSCHAFT Aeulestrasse 10 FL-9490 Vaduz(LI)**

(72) Erfinder: **Gädke-Fuhrmann, Elke M. Mammolshainerstrasse 15 W-6380 Bad Homburg(DE)**

(74) Vertreter: **Linser, Heinz et al Patentanwälte Heinz Linser Dipl. Ing. Eckhardt Eyer Robert-Bosch-Strasse 12a Postfach 10 22 10 W-6072 Dreieich(DE)**

(54) **Verfahren und Vorrichtung zur gleichzeitigen Desinfektion und Entfernung von Nitrat/Nitrit Ionen sowie anderer adsorbierbarer Stoffe aus Trinkwasser.**

(57) Die Erfindung betrifft eine Vorrichtung zur gleichzeitigen Desinfektion und Entfernung von Nitrat/Nitrit-Ionen sowie anderer adsorbierbarer, organischer Verunreinigungen in kleinen Vorräten von Trinkwasser und ein Verfahren unter Anwendung dieser Vorrichtung. Hierbei sind mindestens drei hintereinander geschaltete und strömungsmäßig miteinander verbundene Behälter (A,B,C,D) als eine Einheit ausgebildet, wobei der erste Behälter (A) einen Wasservorratsbehälter mit Niveauregelung (1) aufweist, dem sich eine Vorrichtung zur kontinuierlichen Erzeugung eines gasförmigen Desinfektionsmittels (2A oder 2B) anschließt, welches mit dem Wasser in einen mit Acrylfilter und Schichten von nitratspezifischen Anionenaustauschern versehenen Behälter (C) eingeleitet wird, dem sich ein Behälter (D) anschließt, welcher Aktivkohlefilter aufweist.

EP 0 445 792 A1

Die Erfindung betrifft eine Vorrichtung zur gleichzeitigen Desinfektion und Entfernung von Nitrat/Nitrit-Ionen sowie anderer adsorbierbarer, organischer Verunreinigungen in kleinen Vorräten von Trinkwasser und ein Verfahren unter Anwendung dieser Vorrichtung.

Nitrat kommt zunehmend sowohl im Trinkwasser, als auch natürlicherweise in Nahrungsmitteln, namentlich pflanzlicher Herkunft, vor.

Die Toxität von Nitrat steigt erheblich an, wenn eine Reduktion zum gefährlichen Nitrit stattfindet. Die Reduktion kann hierbei in verschiedener Weise eintreten, nämlich durch:

1.) Anwesenheit von nitratreduzierenden Keimen im Magen-Darmbereich, und

2.) durch Anwesenheit von nitratreduzierenden Keimen in Trinkwasseraufbereitungsgeräten, beispielsweise im Haushalt.

Die Zunahme der Nitratkonzentration im Trinkwasser sowie die Anwesenheit von Pestiziden und Insektiziden, bedingt durch den verschwenderischen Gebrauch in der Vergangenheit, nimmt in der gesamten Welt beängstigende Formen an. Zusätzlich zu diesen Verunreinigungen besteht in fast allen Ländern das Problem, bakteriell einwandfreies Wasser zu erhalten. In Industrieländern besteht ferner Interesse zur Behandlung begrenzter Mengen von Trinkwasser, wie z.B. für Babynahrung, Reisebedarf und Camping. In den Ländern der dritten Welt ist die Behandlung von kleinen Wasservorräten ebenfalls sehr wichtig, da bis zum heutigen Tage, weltweit, die Mehrheit der Städte und Dörfer Trinkwasser aus oftmals nicht kontrollierten Brunnen beziehen. Diese Tatsache macht es zwingend, daß für die Behandlung begrenzter Trinkwassermengen eine Methode geschaffen wird, die gleichzeitig - auf preiswerte und einfache Art - Bakterien, Nitrate/Nitrite und nicht zuletzt wichtige organische Verunreinigungen entfernt. Ein Verfahren, das nicht noch zusätzlich Chemikalien zu dem schon belasteten Trinkwasser hinzu-fügt, wäre hierfür erstrebenswert. Ein Überblick der erhältlichen Systeme bzw. Verfahren zur Desinfektion, Entfernung von Nitrat/Nitrit-Ionen zeigt aber, daß es kein brauchbares System gibt, welches den vorgenannten Forderungen entspricht. Es gibt auf dem Markt Wasserfilter, diese sind aber nichts weiter als Anionen/Kationenaustauscher, die in der Lage sind, alle Anionen und Kationen zu entfernen und reines, destilliertes Wasser zu liefern. Nach ernährungsphysiologischen Erfahrungen ist destilliertes Wasser für den menschlichen Genuß nicht geeignet, ja sogar schädlich.

Es sind zahlreiche Geräte zur Enthärtung oder zur einfachen Filtrierung von Trinkwasser für den Haushaltsbedarf auf dem Markt. In diesen Geräten sammeln sich im Laufe der vorbestimmten Anwendung die im Wasser befindlichen Keime an, welche sich in der Trinkwasseraufbereitungsanlage auch erheblich vermehren können. Keines dieser Geräte sieht jedoch eine Möglichkeit zum Entkeimen der Filterschicht nach längerem Gebrauch vor, so daß die Wirksamkeit der Anlagen nachläßt, was bis zur Unbrauchbarkeit führen kann.

Es ist bekannt, daß Ionenaustaucher aufgrund ihrer Makroporosität einen ausgezeichneten Nährboden für Bakterienwachstum bieten.

Ferner ist es auch bekannt, daß solche Ionenaustauscher, die vorzugsweise in Form von Kügelchen ausgebildet sind, besonders schnell verkeimen, wenn sie mit Nitrationen beaufschlagt sind.

Die Nitratkonzentration im Trinkwasser steigt ständig weltweit an. In vielen Fällen liegt der Grund in der intensiven Bodennutzung durch Überdüngung. Der nicht vom Boden bzw. den Pflanzen aufgenommene Stickstoff wird herausgespült und gelangt in das Grund- und Oberflächenwasser und damit in den Nahrungsmittelkreislauf.

Die zulässigen Grenzwerte für Nitrat im Trinkwasser sind in Europa auf einen Wert von 25mg/l festgelegt. Da viele Trinkwasser-Quellen diese Werte übersteigen, besteht in fast allen Ländern ein zunehmender Bedarf für eine sichere und einfache Filtervorrichtung zur Wasseraufbereitung für Trinkzwecke und zur Bereitung von gesunden und schadstoffreien Nahrungsmitteln.

Die Entfernung von Nitrationen mit Hilfe von Ionenaustauchern ist an sich bekannt. Problematisch ist es jedoch die Vorrichtungen zum Ionenaustausch ständig keimfrei zu halten und eine Keimfreiheit während eines mehrtätigen Gebrauchs zu gewährleisten.

Der vorliegenden Erfindung liegt die Aufgabe zugrunde eine Filtereinheit zu schaffen, welche nicht nur die Entfernung von Nitrationen und anderer absorbierbarer Stoffe aus Trinkwasser ermöglicht, sondern auch eine kontinuierliche oder periodische Desinfektion der Filterschichten ohne Zugabe zusätzlicher Chemikalien gestattet.

Die Lösung dieser Aufgabe besteht darin, daß bei der eingangs genannten Vorrichtung mindestens drei hintereinander geschaltete und strömungsmäßig miteinander verbundene Behälter (A,B,C,D) als eine Einheit ausgebildet sind, wobei der erste Behälter (A) einen Wasservorratsbehälter mit Niveauregelung aufweist, dem sich eine Vorrichtung zur kontinuierlichen Erzeugung eines gasförmigen Desinfektionsmittels (2A oder 2B) anschließt, welches mit dem Wasser in einen mit Acrylfilter und Schichten von nitratspezifischen Anionenaustauschern versehenen Behälter (C) eingeleitet wird, dem sich ein Behälter (D) anschließt,

2

welcher Aktivkohlefilter aufweist.

Gemäß dem Verfahren nach der Erfindung wird dem zu desinfizierenden Wasser ein gasförmiges Desinfektionsmittel zugeführt.

In einer Ausführungsform der Erfindung wird dem zu desinfizierenden Wasser Hypochlorsäure mit einem deutlichen Überschuß an aktivem Chlor zugeführt, welches am Ende des letzten Behälters vor der Austrittsöffnung vollständig entfernt wird.

In Weiterbildung der Erfindung ist zur Entfernung von Nitrat/-Nitrit-Ionen im Behälter (C) ein nitratspezifischer Ionenaustauscher vorhanden, der eine Anionenaustauscherkombination aufweist.

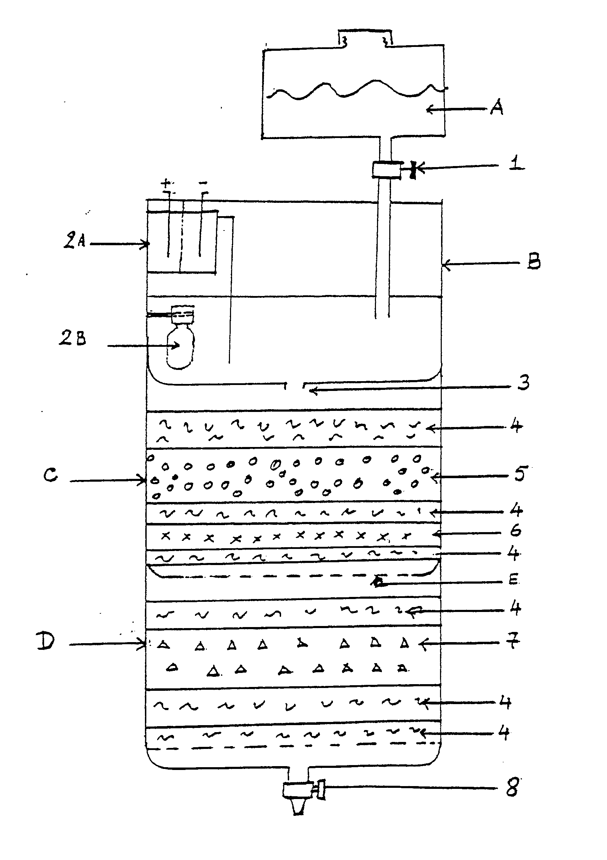

Vorliegender Erfindung sind die Forderungen zur gleichzeitigen Desinfektion und Entfernung von Nitrat/Nitrit Ionen sowie anderer adsorbierbarer Stoffe aus Trinkwasser zugrundegelegt. Obwohl die verwendeten Methoden zur Chlorung/Denitrifikation und Adsorption bekannt sind, ermöglicht die Kombination derselben ein außerordentliches Ergebnis. Der Grund für die markanten Resultate ist auf die Anwesenheit von freiem Chlor in allen Stufen zurückzuführen. Eine bakterielle Kontamination wird dadurch vermieden und die Ionenaustauschselektivität für Nitrat-Ionen sowie die Flockung der Trübung wird erhöht. Ebenfalls werden die Adsorptionseigenschaften des aktiven Kohlefilters erhöht. Die Figur zeigt den Aufbau einer Kompakteinheit nach vorliegender Erfindung.

Ein Wasservorratsbehälter A ist mit einem Niveauregler 1 versehen, der das zu desinfizierende Wasser dem Behälter B zuführt. In der hier vorliegenden Darstellung zeigt dieser zwei Ausführungsformen zur kontinuierlichen Chlorung. Die Ausführungsform 2A besteht dabei aus einer Elekrolysezelle für Natriumchlorid mit einem Diaphragma.

In einer alternativen Ausführungsform wird eine Patrone 2B verwendet, welche auf der Basis der Diffusion durch Kunststoffmembranen arbeitet.

Durch die Verwendung einer der beiden Alternativen wird nur Hypochlorsäure dem zu desinfizierenden Wasser kontinuierlich zugeführt. Durch den Ausgang 3 des Behälters B sickert das Wasser mit einem Überschuß an aktivem Chlor in den Behälter C, der mit verschiedenen Filterschichten versehen ist. So besteht die erste Filterschicht 4 aus einem Acrylfilter, während die Schichten 5 und 6 von nitratspezifischen Anionenaustauschern gebildet werden, welche jeweils von weiteren Acrylfiltern 4 eingebettet sind. Schließlich gelangt das Wasser in den Behälter D, welcher mit Spezial-Aktivkohlefilter 7 versehen ist. Aus dem Auslauf 8 ist nunmehr desinfiziertes reines Wasser zu entnehmen, welches chlorfrei ist und dessen ursprüngliche Ionenkonzentration unverändert geblieben ist.

Die Wirkungseigenschaften der Kompakteinheit werden durch eine kontinuierliche Anwsenheit von aktivem Chlor bis kurz vor dem Wasseraustritt gewährleistet. Der überschuß an aktivem Chlor wird durch das Aktivkohlefilter völlig entfernt, so daß das der Vorrichtung entnommene Wasser geruchlos, frei von Bakterien, Nitrat, Nitrit sowie adsorbierbaren, organischen Verunreinigungen wie z.B. Pestizide und Herbizide ist, wobei die natürliche Anionen-/Kationen-Konzentration erhalten bleibt.

Die folgende Tabelle zeigt das analytische Ergebnis, welches durch Verwendung einer Einheit nach der Erfindung erreicht wird.

| Ionen Konz. mg/l | Vor Filter mg/l | nach Filter mg/l |
|---|---|---|
| Nitrat | 45 | 1 |
| Chlorid | 28 | 38 |
| Sulfat | 39 | 29 |
| Bicarbonat | 96 | 100 |
| Calcium | 51 | 51 |
| Natrium | 16 | 16 |
| Kalium | 1,4 | 1,4 |
| Magnesium | 8,3 | 8,4 |
| Atrazin | 0,5 $\mu$g/l | 0 |
| Chloroform | 3 $\mu$g/l | 0 |

Die Einheit wurde so dimensioniert, daß 5 l/Tag zwei Wochen lang aufbereitet werden konnten.

**Patentansprüche**

1. Vorrichtung zur gleichzeitigen Desinfektion und Entfernung von Nitrat/Nitrit-Ionen sowie anderer adsorbierbarer, organischer Verunreinigungen in kleinen Vorräten von Trinkwasser, **dadurch gekennzeichnet, daß** mindestens drei hintereinander geschaltete und strömungsmäßig miteinander verbundene Behälter (A,B,C,D) als eine Einheit ausgebildet sind, wobei der erste Behälter (A) einen Wasservorratsbehälter mit Niveauregelung (1) aufweist, dem sich eine Vorrichtung zur kontinuierlichen Erzeugung eines gasförmigen Desinfektionsmittels (2A oder 2B) anschließt, welches mit dem Wasser in einen mit Acrylfilter und Schichten von nitratspezifischen Anionenaustauschern versehenen Behälter (C) eingeleitet wird, dem sich ein Behälter (D) anschließt, welcher Aktivkohlefilter aufweist.

2. Vorrichtung nach Anspruch 1, **dadurch gekennzeichnet, daß** zur kontinuierlichen Chlorung eine Elektrolysezelle für Natriumchlorid mit einem Diaphragma (2A) im Behälter (B) angeordnet ist.

3. Vorrichtung nach Anspruch 1, **dadurch gekennzeichnet, daß** zur kontinuierlichen Chlorung im Behälter (B) eine Patrone angeordnet ist, welche auf der Basis der Diffusion durch Kunststoffmembranen Hypochlorsäure freigibt.

4. Vorrichtung nach Anspruch 1, 2 oder 3, **dadurch gekennzeichnet, daß** der Behälter (D) an sich bekannte Adsorptionsmittel, wie synthetische Fasern aus der Gruppe Acryl, aliphatische Polyamide (Nylon) oder Polyvenylacetat aufweist, dem sich ein Aktivkohlegranulat anschließt.

5. Verfahren zur gleichzeitigen Desinfektion und Entfernung von Nitrat/Nitrit-Ionen sowie anderer adsorbierbarer, organischer Verunreinigungen in kleinen Vorräten von Trinkwasser unter Anwendung der Vorrichtung nach den Ansprüchen 1 bis 4, **dadurch gekennzeichnet, daß** dem zu desinfizierenden Wasser ein gasförmiges Desinfektionsmittel zugeführt wird.

6. Verfahren nach Anspruch 5, **dadurch gekennzeichnet, daß** dem zu desinfizierenden Wasser Hypochlorsäure mit einem deutlichen Überschuß an aktivem Chlor zugeführt wird, welches am Ende des letzten Behälters vor der Austrittsöffnung vollständig entfernt wird.

7. Verfahren nach Anspruch 5 oder 6, **dadurch gekennzeichnet, daß** zur Entfernung von Nitrat/Nitrit-Ionen im Behälter (C) ein nitratspezifischer Ionenaustauscher vorhanden ist, der eine Anionenaustauscherkombination aufweist.

8. Verfahren nach Anspruch 5, 6 oder 7, **dadurch gekennzeichnet, daß** der Behälter (C) unter einem Chlorüberschuß gehalten wird, so daß die Keimfreiheit der Austauscherschicht sichergestellt ist.

9. Verfahren nach Anspruch 4, 5, 6 oder 7 **dadurch gekennzeichnet, daß** die ursprüngliche Ionenkonzentration des zu desinfizierenden Wassers erhalten bleibt.

**Europäisches Patentamt**

**EUROPÄISCHER RECHERCHENBERICHT**

Nummer der Anmeldung

**EP 91 10 3454**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 724 079  (SALE et al.)<br>* Zusammenfassung *<br>– – – | 1 | C 02 F 9/00<br>C 02 F 1/42<br>C 02 F 1/28<br>C 02 F 1/76<br>B 01 J 41/00 |
| A | DE-A-3 840 276  (STAUSBERG)<br>* Zusammenfassung *<br>– – – | 1 | |
| A | US-A-4 913 808  (HAQUE)<br>* Anspr. *<br>– – – – – | | |

| | RECHERCHIERTE SACHGEBIETE (Int. Cl.5) |
|---|---|
| | C 02 F<br>B 01 J |

Der vorliegende Recherchenbericht wurde für alle Patentansprüche erstellt

| Recherchenort | Abschlußdatum der Recherche | Prüfer |
|---|---|---|
| Den Haag | 14 Juni 91 | KASPERS H.M.C. |